# EUROPÄISCHE PATENTSCHRIFT

(11) **EP 2 864 158 B1**
(45) Veröffentlichungstag und Bekanntmachung des Hinweises auf die Patenterteilung: **02.11.2016**
(21) Anmeldenummer: 13726522.9
(22) Anmeldetag: 03.06.2013
(51) Int. Cl.: B60Q 1/14

(54) **VERFAHREN ZUM BETREIBEN EINES SCHEINWERFERSYSTEMS IN EINEM FAHRZEUG UND DAZUGEHÖRIGES SCHEINWERFERSYSTEM**
METHOD FOR OPERATING A HEADLIGHT SYSTEM IN A VEHICLE AND ASSOCIATED HEADLIGHT SYSTEM
PROCÉDÉ D'UTILISATION D'UN SYSTÈME DE PHARE DANS UN VÉHICULE ET SYSTÈME DE PHARE ASSOCIÉ

(30) Priorität: 26.06.2012 DE 102012012731; 07.03.2013 DE 102013003959
(43) Veröffentlichungstag der Anmeldung: 29.04.2015
(73) Patentinhaber: Volkswagen Aktiengesellschaft, 38440 Wolfsburg (DE)
(72) Erfinder: WEGWERTH, Christian, 38448 Wolfsburg (DE); JÜRGENS, Christian, 70193 Stuttgart (DE); SIMON, Steve, 02763 Zittau (DE)
(86) Internationale Anmeldenummer: PCT/EP2013/061386
(87) Internationale Veröffentlichungsnummer: WO 2014/001022

(56) Entgegenhaltungen:
- EP-A1- 2 420 986
- EP-A2- 2 309 176
- EP-A2- 2 415 636
- WO-A1-2011/047751
- DE-A1-102006 041 857

## Beschreibung

Die vorliegende Erfindung betrifft ein Verfahren zum Betreiben eines Scheinwerfersystems in einem Fahrzeug, bei dem ein Individuum in der Umgebung des Fahrzeugs erfasst und daraufhin die Lichtverteilung verändert wird. Die vorliegende Erfindung betrifft des Weiteren ein dazugehöriges Scheinwerfersystem.

Scheinwerfersysteme zum Bereitstellen verschiedener Lichtfunktionen sind als solche bekannt. Die Lichtemission der Scheinwerfer solcher Scheinwerfersysteme ist steuerbar, sodass die auszusendende Lichtverteilung variiert werden kann. Neben vom Fahrer manuell zu steuernden Lichtfunktionen, wie z.B. das manuelle Umschalten zwischen einem Abblendlicht und einem Fernlicht, sind auch automatisch regelbare Lichtfunktionen bekannt, bei denen in Abhängigkeit von Fahrzeuginformationen die Scheinwerfer automatisch geregelt werden. Auf diese Weise kann die von den Scheinwerfern zu emittierende Lichtverteilung an den voraus liegenden Streckenabschnitt, die Verkehrssituation, die Lichtverhältnisse und die Wetterbedingungen angepasst werden, um die Sicht des Fahrers zu verbessern und ggf. die Blendung anderer Verkehrsteilnehmer zu reduzieren. Die Lichtverteilung wird z.B. als Kurvenlicht in Abhängigkeit vom Lenkwinkel oder einem erfassten voraus liegenden Kurvenabschnitt angepasst.

Individuen in der Umgebung in Fahrtrichtung vor einem Fahrzeug, z.B. Menschen oder Tiere am Straßenrand oder auch auf der Fahrbahn, stellen eine potentielle Unfallgefahr dar. Aus diesem Grund wurde die Erfassung solcher Individuen durch z.B. Nachtsichtsysteme vorgeschlagen, um den Fahrer frühzeitig auf solche Gefahrenpotentiale aufmerksam zu machen und ggf. die Lichtverteilung entsprechend anzupassen.

Die WO 03/106219 A1 beschreibt beispielsweise ein Verfahren zur Steuerung der Lichtverteilung eines Fahrzeugs, bei dem mittels einer Infrarot-Kamera ein potentielles Hindernis erfasst wird und die Lichtverteilung so verändert wird, dass das potentielle Hindernis partiell angeleuchtet wird.

Die DE 103 54 104 A1 beschreibt ein Verfahren zur Steuerung der Ausleuchtung eines seitlichen Fahrbahnbereichs mittels eines Hilfsscheinwerfers. Im Umfeld des Fahrzeugs werden Objekte, insbesondere Fußgänger, z.B. durch ein Nachtsichtsystem erfasst. Mittels eines Algorithmus wird eine Unfallgefahr erkannt und bei einer Kollisionswahrscheinlichkeit des Objekts mit dem Fahrzeug wird der Hilfsscheinwerfer auf das Objekt ausgerichtet.

Die DE 10 2009 051 485 A1 beschreibt ein Verfahren zur Steuerung einer mehrere Leuchtdioden umfassenden Beleuchtungseinrichtung eines Fahrzeugs. Dabei wird in der Umgebung des Fahrzeugs die relative Position, Geschwindigkeit und/oder Beschleunigung eines Objekts, z.B. eines Fußgängers, sensorisch erfasst, z.B. mittels einer Infrarot-Kamera und eines Nachtassistenzsystems. Das Objekt wird mittels einer Auswerteeinheit als Gefahrenpunkt erkannt und die Scheinwerfer werden derart gesteuert, dass die Lichtverteilung einer oder mehrerer Leuchtdioden auf den Gefahrenpunkt gerichtet wird. Um eine Blendung zu Vermeiden, falls es sich bei dem Objekt um einen Fußgänger oder ein Tier handelt, wird die Beleuchtung nur bis zu einer Grenze unterhalb des Kopfes beleuchtet.

Die EP 2 338 729 A1 sowie die EP 2 261 081 beschreiben ebenfalls Verfahren zum Steuern einer mehrere Leuchtdioden umfassende Beleuchtungseinrichtung eines Fahrzeugs zur Erzeugung mehrerer Lichtverteilungen, z.B. Abblendlicht und Fernlicht. Dabei kann ein Markierungslicht zum Markieren von z.B. Fußgängern bereitgestellt werden, welche mittels Nachtsichtgeräten erfasst werden können.

Ein gattungsgemäßes Verfahren bzw. Scheinwerfersystem ist aus EP 2 309 176 bekannt.

Es ist die Aufgabe der vorliegenden Erfindung, ein Verfahren und ein Scheinwerfersystem bereitzustellen, das eine kostengünstige Lichtanpassungsfunktion aufweist, welche eine verbesserte Wahrnehmung von Individuen in der Umgebung in Fahrtrichtung vor einem Fahrzeug unterstützt und welche bezüglich der Nachrüstung oder Weiterentwicklung möglichst geringe Voraussetzungen an bestehende Fahrzeugmodelle stellt.

Diese Aufgabe wird erfindungsgemäß durch ein Verfahren mit den Merkmalen des Anspruchs 1 sowie durch ein Scheinwerfersystem mit den Merkmalen des Anspruchs 12 gelöst. Vorteilhafte Aus- und Weiterbildungen ergeben sich aus den abhängigen Ansprüchen.

Bei dem erfindungsgemäßen Verfahren umfasst das Scheinwerfersystem wenigstens einen Scheinwerfer, wobei die Lichtemission des Scheinwerfers jeweils um eine im Wesentlichen vertikale Achse schwenkbar ist. Das Verfahren umfasst dabei die Schritte, dass das Scheinwerfersystem in einem ersten Betriebsmodus betrieben wird, die Position und/oder die Bewegung eines Individuums in der Umgebung in Fahrtrichtung vor dem Fahrzeug sensorisch erfasst wird und das Scheinwerfersystem in einen zweiten Betriebsmodus wechselt, wenn ein Individuum erfasst wurde. Dabei wird die Lichtemission des wenigstens einen Scheinwerfers in Abhängigkeit von der Position und/oder der Bewegung des Individuums durch Schwenken des Scheinwerfers um die vertikale Achse seitlich geschwenkt. Dies hat den Vorteil, dass herkömmliche Scheinwerfersysteme mit z.B. einer Kurvenlichtfunktion ohne Änderung am apparativen Aufbau der Scheinwerfer wiederverwendet werden können. Systemvoraussetzungen für die Scheinwerfer sind nur die Schwenkbarkeit um eine im Wesentlichen vertikale Achse. Der Steuerungsalgorithmus der Lichtverteilung muss lediglich dahingehend erweitert werden, dass die Lichtverteilung in Abhängigkeit von einer weiteren Eingangsgröße, die sich aus der sensorischen Erfassung des Individuums ergibt, steuerbar ist. Zum Erfassen der Individuen kann auf an sich bekannte Nachtsichtsysteme, z.B. Infrarot-Kameras, zurückgegriffen werden.

Erfindungsgemäß umfasst das Scheinwerfersystem wenigstens einen Scheinwerfer mit wenigstens einer verstellbaren Blende zur Veränderung der Hell-Dunkel-Grenze der Lichtemission des Scheinwerfers. Bei dem Wechsel in den zweiten Betriebsmodus wird dann zusätzlich eine Blende des wenigstens einen Scheinwerfers verstellt, so dass die Hell-Dunkel-Grenze der Lichtemission des wenigstens einen Scheinwerfers wenigstens in einem Lateralwinkelbereich vertikal verändert wird. Auch hier können herkömmliche Scheinwerfersysteme verwendet werden. Systemvoraussetzungen sind dann neben der Schwenkbarkeit das Vorhandensein von Blenden, wie diese üblicherweise z.B. für die Umstellung zwischen einem Abblendlicht und Fernlicht vorhanden sind.

Das erfindungsgemäße Verfahren eignet sich somit für die Integration in bestehende adaptive Frontbeleuchtungssysteme (sogenannte Adaptive Frontlighting Systems "AFS"). Solche Systeme können dabei über mehr als zwei Betriebsmodi umfassen, bei denen verschiedene Lichtfunktionen nacheinander oder auch gleichzeitig verfügbar sein können. Der erste Betriebsmodus ist insbesondere ein Abblendlicht oder ein sogenanntes Stadtlicht, bei dem die Hell-Dunkel-Grenze zumindest für einen Lateralwinkelbereich unterhalb der Horizontalebene, die die Lichtquelle des wenigstens einen Scheinwerfers schneidet, liegt. Im ersten Betriebsmodus wird die Lichtverteilung in Vorausrichtung z.B. auf einen Vertikalwinkel von minus 15° beschränkt, d.h. nach unten gerichtet. Je nachdem, ob am Straßenrand oder auf der Gegenfahrbahn ein Blenden anderer Verkehrsteilnehmer vermieden werden muss, kann die Hell-Dunkel-Grenze aber auch asymmetrisch verlaufen und wenigstens in einem Lateralwinkelbereich oberhalb der Horizontalebene liegen. Unter dem Lateralwinkel wird der Winkel verstanden, der sich durch die Projektion der Lichtemissionsrichtung auf die Horizontalebene ergibt.

Die Bewegung des Individuums wird insbesondere in Bezug auf die Veränderung der Position des Individuums bezogen, das heißt die Fortbewegung des Individuums, wobei ein Stillstand des Individuums als eine Bewegung mit dem Betrag Null anzusehen ist. Insbesondere wird auch die Relativbewegung zum Fahrzeug ausgewertet und berechnet, ob sich die Trajektorien des Fahrzeugs und des Individuums voraussichtlich kreuzen werden.

Gemäß der vorliegenden Erfindung ist vorgesehen, dass beim Wechsel in den zweiten Betriebsmodus die Lichtemission des wenigstens eines Scheinwerfers durch Schwenken seitlich bis zum sensorisch erfassten Individuum erweitert wird. Hierdurch wird das Individuum möglichst frühzeitig sichtbar gemacht. Bei größeren Winkeln zwischen der Position des Individuums und der Fahrtrichtung kann es jedoch unter Umständen auch unmöglich sein, die Lichtemission durch Schwenken bis zum Individuum zu erweitern.

In einer Ausgestaltung des erfindungsgemäßen Verfahrens wird dem sensorisch erfassten Individuum in Abhängigkeit von seiner Position und/oder Bewegung eine Kritikalitätsklasse zugeordnet und es werden die Hell-Dunkel-Grenze und/oder der Schwenkwinkel in Abhängigkeit von der zugeordneten Kritikalitätsklasse verändert. Maßgebliche Parameter, in deren Abhängigkeit die Lichtverteilung geändert wird, sind z.B. der Abstand vom Fahrzeug zum Individuum entlang der Fahrbahn, der Abstand vom Individuum quer zur Fahrbahn oder Fahrbahnmitte oder die Bewegungskomponente des Individuums quer zur Fahrbahn. Die Unterschiedliche Veränderung der Lichtverteilung in Abhängigkeit von der Kritikalitätsklasse bezieht sich insbesondere darauf, wie schnell, ob und ggf. in welchem Ausmaß der Scheinwerfer verschwenkt oder die Blende verstellt wird. Gemäß einer Ausgestaltung der Erfindung wird die Lichtemission des wenigstens einen Scheinwerfers im zweiten Betriebsmodus nur dann geschwenkt wird, wenn eine Bewegungskomponente des Individuums erfasst wurde, die größer als eine vorbestimmte Bewegungskomponente quer zur Fahrbahn ist. Der Fahrer des Fahrzeugs kann durch die unterschiedliche Anpassung der Lichtverteilung schnell und intuitiv die Kritikalität und das Gefahrenpotential der jeweiligen Situation erfassen.

Auch wenn das Fahrzeug mehrere Scheinwerfer aufweist, z.B. üblicherweise zwei Scheinwerfer, so wird vorteilhafterweise die Lichtemission nur eines Scheinwerfers verändert, sodass erstens der Fahrer selektiv durch die Veränderung auf das sensorisch erfasste Individuum hingewiesen wird und zweitens möglichst einfach ein Blenden anderer Verkehrsteilnehmer vermieden werden kann. Dadurch, dass die Lichtemission des zweiten Scheinwerfers konstant gehalten wird, wird ferner die Ausleuchtung im Bereich vor dem Fahrzeug nur geringfügig verändert. Bei Rechtsverkehr ist eine Veränderung der Lichtemission des linken Scheinwerfers besonders zweckmäßig (bei Linksverkehr entsprechend umgekehrt), weil dies die Seite ist, zu welcher ein asymmetrisches Abblendlicht die Hell-Dunkel-Grenze tiefer einstellt und somit auch ein erhöhter Bedarf besteht, diesen Bereich besser zu beleuchten, wenn dort ein Gefahrenpotential durch ein sich dort aufhaltendes Individuum erkannt wurde. Der betreffende Scheinwerfer kann auch in Abhängigkeit von der Position des Individuums ausgewählt werden. Insbesondere wird der rechte bzw. linke Scheinwerfer bei Individuen in Fahrtrichtung rechts bzw. links vor dem Fahrzeug ausgewählt.

Gemäß einer Ausgestaltung des erfindungsgemäßen Verfahrens ist vorgesehen, dass der wenigstens eine Scheinwerfer im zweiten Betriebsmodus die Lichtverteilung einer Fernlichtfunktion verwendet, beispielsweise dann, wenn eine höhere Kritikalität erkannt wurde. Hierbei ist jedoch darauf zu achten, dass weder andere Verkehrsteilnehmer noch das Individuum geblendet werden. Um dies sicherzustellen, wird wenigstens für einen Lateralwinkelbereich, in dem sich das Individuum oder auch andere Verkehrsteilnehmer befinden, die Hell-Dunkel-Grenze im zweiten Betriebsmodus bis auf einen begrenzten Vertikalwinkel verändert. Dieser Vertikalwinkel bestimmt sich aus dem Vertikalwinkel der Horizontalebene, die die Lichtquelle des wenigstens einen Scheinwerfers schneidet (also 0°), oder einem Vertikalwinkel, der an der Position des sensorisch erfassten Individuums einer ersten Höhe zwischen 0,5 m bis 1,0 m, vorzugsweise etwa 0,8 m, entspricht, je nachdem, welcher Vertikalwinkel weiter nach unten gerichtet ist. Wie Versuchsergebnisse gezeigt haben, reicht eine Beleuchtung bis in diese Höhe aus, um das Individuum noch gut zu erkennen, ohne es dabei aber zu blenden. Die exakte Höhe wird insbesondere an die Augenhöhe des Individuums angepasst, wobei sie soviel tiefer liegen sollte, dass eine Blendung des Individuums ausgeschlossen ist. Hierbei ist ferner zu berücksichtigen, in welcher Höhe die Lichtquelle des wenigstens einen Scheinwerfers am Fahrzeug angeordnet ist. Je nach Fahrzeugtyp kann diese Höhe auch insbesondere mehr als 1,0 m betragen.

In einer Weiterbildung des erfindungsgemäßen Verfahrens umfasst das Scheinwerfersystem als Systemvoraussetzung wenigstens eine Zusatzlichtquelle, die geeignet ist, Licht in die Umgebung in Fahrtrichtung vor dem Fahrzeug zu emittieren. Das Gefahrenpotential einer Kollision zwischen Fahrzeug und Individuum wird dann bewertet und bei der Zuordnung der Kritikalitätsklassen berücksichtigt. Wenn das Gefahrenpotential einen Grenzwert überschreitet, wird die Zusatzlichtquelle eingeschaltet, wobei die Lichtverteilung der Zusatzlichtquelle vorzugsweise auf einen Höhenbereich ausgerichtet wird, dessen untere Grenze der ersten Höhe, die zwischen 0,5 m und 1,0 m liegt, an der Position des Individuums entspricht. Das Individuum wird somit ab einem bestimmten Gefahrenpotential noch besser beleuchtet, bzw. die Existenz des Individuums wird durch die geänderte Lichtverteilung noch besser signalisiert.

Als Zusatzlichtquelle eignen sich insbesondere in ihrer Helligkeit einfach zu steuernde Lichtquellen wie z.B. Leuchtdioden (Light Emitting Diodes, LED) oder Mikrospiegelanordnungen, sogenannte Digital Mirror Devices (DMD). Diese können als Matrix-Scheinwerfer zusammengefasst sein, die Licht in einen definierten, scharf begrenzten Raumwinkelbereich abstrahlen können. Die Helligkeit der Zusatzlichtquelle wird dann gemäß einer Ausführungsform der Erfindung in Abhängigkeit von der Kritikalitätsklasse und/oder dem Gefahrenpotential verändert, wobei die Helligkeit bei der untersten Kritikalitätsklasse und/oder dem niedrigsten Gefahrenpotential, bei dem die Zusatzlichtquelle eingeschaltet wird, der Helligkeit der angrenzenden Lichtverteilung des wenigstens einen Scheinwerfers entspricht. Die Abstimmung der Höhenbereiche der Lichtemission der Scheinwerfer und der Zusatzlichtquelle sowie Wahl der Helligkeit in Abhängigkeit vom Gefahrenpotential hat den Vorteil, dass zunächst eine gleichmäßige Helligkeit erreicht wird, die Sichtbarkeit des Individuums im Gefahrenfall jedoch noch weiter verbessert und die Aufmerksamkeit des Fahrers noch besser auf die Existenz des Individuums im Gefahrenbereich gelenkt wird.

Praktischerweise werden eine oder mehrere Gefahrenzonen in der Umgebung in Fahrtrichtung vor dem Fahrzeug definiert, die umso größer gewählt werden, desto größer die Geschwindigkeit des Fahrzeugs ist. Die Bewertung des Gefahrenpotentials und/oder die Zuordnung zu einer Kritikalitätsklasse erfolgt dann in Abhängigkeit davon, ob die gegenwärtige Position und/oder eine aus der Bewegung des Individuums prognostizierte zukünftige Position in einer der Gefahrenzonen liegt. Insbesondere trägt die geschwindigkeitsabhängige Dimensionierung der Gefahrenzonen der Tatsache Rechnung, dass bei höherer Geschwindigkeit des Fahrzeugs der Bremsweg länger, die Zeitspanne zu einer potentiellen Kollision bei gleichem Abstand zum Individuum kürzer und die zu erwartende Unfallschwere, falls es zu einer Kollision kommt, größer ist.

Um bei der Anpassung der Lichtverteilung ein Blenden anderer Verkehrsteilnehmer, insbesondere die Fahrer vorausfahrender oder entgegenkommender Fahrzeuge zu vermeiden, wird vorteilhafterweise die Verkehrssituation, d.h. insbesondere die Position und Bewegung der anderen Verkehrsteilnehmer, sensorisch erfasst und die gegenwärtigen und zukünftigen Positionen der anderen Verkehrsteilnehmer bei der Anpassung der Lichtverteilung berücksichtigt. Die Lichtverteilung wird so gesteuert, dass eine Blendung dieser Verkehrsteilnehmer vermieden wird. Das sensorische Erfassen anderer Verkehrsteilnehmer erfolgt z.B. durch eine Multifunktionskamera, z.B. derselben, mit der bereits das Individuum sensorisch erfassbar ist. Alternativ oder ergänzend basiert die Erfassung anderer Verkehrsteilnehmer z.B. auf Messprinzipien nach RADAR (Radio Detecting and Ranging), LIDAR (Light Detecting and Ranging), LASER (Light Amplification by stimulated Emission) oder auf einer Fahrzeug-zu-Fahrzeug-Kommunikation.

Insbesondere wird zusätzlich zur Position und/oder Bewegung eines Individuums in der Umgebung in Fahrtrichtung vor dem Fahrzeug die Position und/oder Bewegung eines entgegenkommenden Fahrzeugs sensorisch erfasst. Wenn zusätzlich ein entgegenkommendes Fahrzeug erfasst wurde, wechselt das Scheinwerfersystem in einen dritten Betriebsmodus.

Bei dem Wechsel in den dritten Betriebsmodus kann das Scheinwerfersystem die Lichtemission des wenigstens einen Scheinwerfers in Abhängigkeit von der Position und/oder der Bewegung des Individuums und/oder der Position und/oder Bewegung des entgegenkommenden Fahrzeugs durch Schwenken des Scheinwerfers um die vertikale Achse seitlich geschwenkt werden und/oder die Lichtemission des wenigstens einen Scheinwerfers in Richtung des entgegenkommenden Fahrzeugs abgeschattet werden und/oder eine Blende des wenigstens einen Scheinwerfers verstellt werden, so dass die Hell-Dunkel-Grenze der Lichtemission derart verändert wird, dass ein Bereich bis zu einem bestimmten Abstand vor dem entgegenkommenden Fahrzeug in der Lichtverteilung ausgespart wird. Der dritte Betriebsmodus verhindert, dass andere Verkehrsteilnehmer geblendet werden und dadurch das erfasste Individuum übersehen wird. Insbesondere reicht der bestimmte Abstand bis zu der Motorhaube des entgegenkommenden Fahrzeugs. Dadurch wird gewährleistet, dass der Fahrer des entgegenkommenden Fahrzeugs nicht direkt durch das Scheinwerferlicht oder durch an der Motorhaube reflektiertes Scheinwerferlicht geblendet wird. Weiterhin kann die Veränderung der Lichtverteilung zusätzlich durch äußere Faktoren beeinflusst sein, wie beispielsweise vorherrschende Wetterbedingungen oder Umgebungslichtverhältnisse.

Insbesondere kann dem sensorisch erfassten Individuum zusätzlich eine Kritikalitätsklasse bezüglich des sensorisch erfassten entgegenkommenden Fahrzeugs in Abhängigkeit von seiner Position und/oder Bewegung zugeordnet werden. Dabei wird die Hell-Dunkel-Grenze und/oder der Schwenkwinkel und/oder die Abschattung der Lichtemission des wenigstens einen Scheinwerfers in Abhängigkeit von der dem Individuum bezüglich des entgegenkommenden Fahrzeugs zugeordneten Kritikalitätsklasse verändert. Wird also beispielsweise die Bewegung eines Fußgängers bezüglich des entgegenkommenden Fahrzeugs als unkritisch eingestuft, so wird die Lichtverteilung in Richtung des entgegenkommenden Fahrzeugs nicht verändert.

Das erfindungsgemäße Scheinwerfersystem für ein Fahrzeug umfasst wenigstens einen Scheinwerfer, dessen Lichtemission um eine im Wesentlichen vertikale Achse schwenkbar ist. Das Scheinwerfersystem umfasst des Weiteren eine Steuereinheit, die mit dem wenigstens einen Scheinwerfer verbunden ist, zum Steuern der Lichtemission des wenigstens einen Scheinwerfers. Das erfindungsgemäße Scheinwerfersystem ist dadurch gekennzeichnet, dass das Scheinwerfersystem eine mit der Steuereinheit verbundene Erfassungseinrichtung zum sensorischen Erfassen der Position und der Bewegung eines Individuums in der Umgebung in Fahrtrichtung vor dem Fahrzeug umfasst und dass mittels der Steuereinheit auf das sensorische Erfassen eines Individuums durch die Erfassungseinrichtung das Scheinwerfersystem von einem ersten in einen zweiten Betriebsmodus wechselbar ist. Dabei ist eine Blende des wenigstens einen Scheinwerfers verstellbar, sodass die Hell-Dunkel-Grenze der Lichtemission des Scheinwerfers wenigstens in einem Lateralwinkelbereich vertikal verändert wird, und es ist die Lichtemission des wenigstens einen Scheinwerfers in Abhängigkeit von der Position und/oder der Bewegung des Individuums durch Schwenken des Scheinwerfers um die vertikale Achse seitlich schwenkbar. Das erfindungsgemäße Scheinwerfersystem ist insbesondere geeignet zum Durchführen des erfindungsgemäßen Verfahrens. Es weist somit auch die Vorteile des erfindungsgemäßen Verfahrens auf.

Gemäß der vorliegenden Erfindung umfasst der wenigstens eine Scheinwerfer eine verstellbare Blende, die in Lichtemissionsrichtung vor dem wenigstens einen Scheinwerfer angeordnet ist, zur Veränderung der Hell-Dunkel-Grenze der Lichtemission des Scheinwerfers. In diesem Falle ist die Steuereinheit zusätzlich mit der wenigstens einen Blende verbunden.

Die Erfassungseinrichtung zum sensorischen Erfassen des Individuums umfasst beispielsweise eine infrarotempfindliche Multifunktionskamera oder Nachtsichtkamera.

Die Scheinwerfer sind insbesondere Scheinwerfer mit einer Gasentladungslampe oder Halogenscheinwerfer, z.B. Xenon-Scheinwerfer oder sogenannte Bi-Xenon-Scheinwerfer. Bei Bi-Xenon-Scheinwerfern wird als Lichtquelle eine Xenon-Gasentladungslampe eingesetzt, die sowohl für mehrere Lichtverteilungen verwendet wird, insbesondere für das Abblendlicht und für das Fernlicht. Eine separate Lichtquelle oder ein separater Scheinwerfer für die Fernlichtfunktion ist hier nicht nötig. Als Blenden können z.B. plattenförmige Blenden verwendet werden, die durch Verschieben, Verschwenken oder Wegklappen die Lichtverteilung des Scheinwerfers ändern. Ferner können auch Walzenblenden, bei welchen durch das Drehen einer Walze die Hell-Dunkel-Grenze verstellbar ist, eingesetzt werden. Solche Blendenanordnungen sind z.B. in der WO 2008/037388 A2 beschrieben.

Erfindungsgemäß ist ein Kraftfahrzeug mit einem solchen Scheinwerfersystem ausgestattet.

Die Erfindung wird nun anhand eines Ausführungsbeispiels mit Bezug zu den Figuren näher erläutert.
- Figur 1: zeigt eine Verkehrssituation, in welcher das Verfahren zum Betreiben eines Scheinwerfersystems anwendbar ist,
- Figur 2: zeigt schematisch ein Scheinwerfersystem gemäß einem Ausführungsbeispiel der Erfindung,
- Figur 3: zeigt ein Flussdiagramm des Verfahrensablaufs gemäß einem Ausführungsbeispiel der Erfindung,
- die Figuren 4A-4E: zeigen Vertikallichtverteilungen, die gemäß einem Ausführungsbeispiel des erfindungsgemäßen Verfahrens erzeugt werden,
- Figur 5: zeigt eine Verkehrssituation, in welcher das Verfahren zusätzlich ein entgegenkommendes Fahrzeug berücksichtigt und
- Figur 6: zeigt ein Flussdiagramm des Verfahrensablaufs gemäß eines zweiten Ausführungsbeispiels der Erfindung.

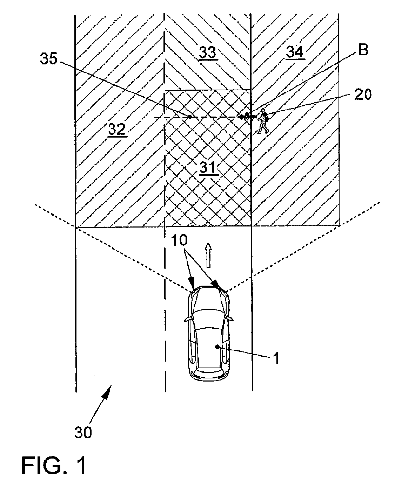

In der Figur 1 ist eine Verkehrssituation dargestellt, in welcher das Verfahren zum Betreiben eines Scheinwerfersystems 10 anwendbar ist. Das Fahrzeug 1, in welchem das Scheinwerfersystem 10 verwendet wird, fährt bei Dämmerung oder Dunkelheit auf einer Straße 30. In einer Entfernung vor dem Fahrzeug 1 befindet sich ein Individuum, z.B. ein Fußgänger 20 am rechten Straßenrand. Der Fußgänger 20 kann stillstehen oder sich mit einer Bewegung B in eine beliebige Richtung bewegen. Insbesondere ist er gerade im Begriff, die Straße 30 entlang der Querungslinie 35 zu queren.

Die Umgebung in Fahrtrichtung vor dem Fahrzeug 1 wird zweckmäßigerweise in verschiedene Bereiche unterteilt. Eine solche Unterteilung in verschiedene Gefahrenzonen 31 - 34 wird im Zusammenhang mit dem erfindungsgemäßen Verfahren noch näher erläutert.

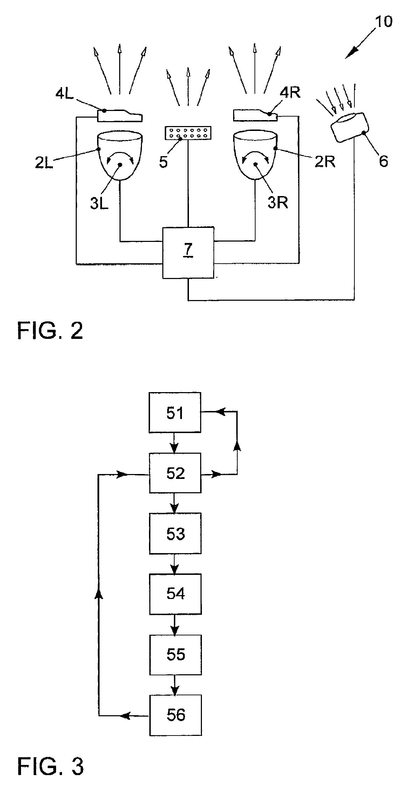

In der Figur 2 ist schematisch ein Scheinwerfersystem 10 gemäß einem Ausführungsbeispiel der Erfindung dargestellt. Das Scheinwerfersystem 10 ist geeignet zum Bereitstellen verschiedener Lichtfunktionen und Lichtverteilungen für ein adaptives Fahrlicht, insbesondere einem Kurvenlicht und einem adaptiven Fernlicht, z.B. einem sogenannten maskierten Dauerfernlicht, bei welchem die Lichtverteilung für Winkelbereiche maskiert oder ausgeblendet wird, um andere Verkehrsteilnehmer nicht zu blenden. Das Scheinwerfersystem 10 basiert dazu auf einem an sich bekannten Scheinwerfersystem mit einem rechten Scheinwerfer 2R und einem linken Scheinwerfer 2L, die beispielsweise als Xenonscheinwerfer ausgestaltet sind. Die Lichtemission der Scheinwerfer 2R, 2L ist jeweils unabhängig voneinander um eine vertikale Achse 3R, 3L schwenkbar. In Lichtemissionsrichtung vor dem rechten und linken Scheinwerfer 2R, 2L ist je mindestens eine verstellbare Blende 4R, 4L angeordnet, sodass durch Verstellen der Blenden 4R, 4L die Hell-Dunkel-Grenze der Lichtemission der Scheinwerfers 2R, 2L separat verändert werden kann. Bei den Blenden 4R, 4L handelt es sich beispielsweise um an sich bekannte Einzelblenden oder Blendenanordnungen mit jeweils mehreren Blenden. Die Blenden 4R, 4L umfassen z.B. Scheibenblenden und/oder Walzenblenden, wobei letztere durch Drehen eine Veränderung der Lichtverteilung vor dem Fahrzeug bewirken.

Das Scheinwerfersystem 10 umfasst des Weiteren ein LED-Matrix-Modul 5 (LED = Light Emitting Diode) mit mehreren LEDs. Das LED-Matrix-Modul 5 ist in der Frontpartie des Fahrzeugs 1 integriert. Es ist insbesondere in einem oder in beiden der Scheinwerfermodule für die Scheinwerfer 2R, 2L angeordnet. Das LED-Matrix-Modul 5 ist geeignet, Licht in einen breiten Lateralwinkelbereich, z.B. ± 45°, in Fahrtrichtung vor dem Fahrzeug 1 und in einen begrenzten Vertikalwinkelbereich, z.B. ± 10°, zu emittieren. Die LEDs sind dazu in Reihen angeordnet, wobei jede LED auf einen bestimmten Raumwinkelbereich ausgerichtet ist oder ausgerichtet werden kann. Es sind beispielsweise zwei Reihen von LEDs, die jeweils einen Höhenbereich von 0,8 m - 1,2 m bzw. von 1,2 m - 1,5 m in einem definierten Abstand, z.B. 30 m beleuchten können. Durch eine Fokussieroptik können dieser Höhenbereiche auch für andere Abstände, z.B. zwischen 5 m und 100 m angepasst werden.

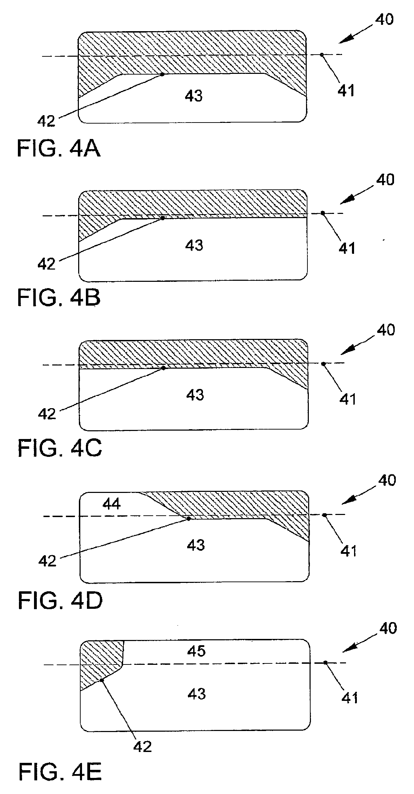

Das Scheinwerfersystem 10 umfasst eine Steuereinheit 7, die mit den Scheinwerfern 2R, 2L, den Blenden 4R, 4L sowie dem LED-Matrix-Modul 5 verbunden ist und Steuersignale zum Steuern der Lichtemission der Scheinwerfer 2R, 2L und des LED-Matrix-Moduls 5 erzeugen kann. Die Steuereinheit 7 kann insbesondere den Schwenkwinkel einer der Scheinwerfer 2R, 2L und die Stellung einer der Blenden 4R, 4L unabhängig voneinander ansteuern. Durch die Steuereinheit 7 ist das Scheinwerfersystem 10 in mehreren Betriebsmodi betreibbar. Dazugehörige Lichtverteilungen werden mit Bezug zu den Figuren 4A - 4E noch näher erläutert.

Das Scheinwerfersystem 10 umfasst ferner ein mit der Steuereinheit 7 verbundenes Kamerasystem 6 zum sensorischen Erfassen der Position und der Bewegung B eines Individuums 20 in der Umgebung in Fahrtrichtung vor dem Fahrzeug 1. Das Kamerasystem 6 umfasst dazu ein an sich bekanntes Infrarot-Nachtsichtsystem, welches Individuen, insbesondere Fußgänger 20 aufgrund der Wärmeabstrahlung auch bei Dämmerung oder Dunkelheit gegenüber der kühleren Umgebung erkennen kann. Das Kamerasystem 6 umfasst beispielsweise einen Bilderfassungsabschnitt zum Erfassen von Bilddaten sowie einen Auswerteabschnitt, mittels dessen die erfassten Bilder dahingehend analysiert werden, ob sich Individuen 20 im erfassten Bildausschnitt befinden. Erfasste Individuen 20 werden beispielsweise klassifiziert, z.B. als Erwachsener, Kind oder Tier und die Bewegungsdaten werden so ausgewertet, dass eine Prognose der voraussichtlichen Trajektorie des betreffenden Individuums 20 möglich ist.

Mittels der Steuereinheit 7 kann nun die Lichtemission des Scheinwerfersystems 10 in Abhängigkeit von einem sensorisch erfassten Fußgänger 20 derart verändert werden, wie dies im Zusammenhang mit einem Ausführungsbeispiel des erfindungsgemäßen Verfahrens nun mit Bezug zu den Figuren 3 und 4A - 4E näher erläutert wird. Zur Ausführung des erfindungsgemäßen Verfahrens kann insbesondere das mit Bezug zur Figur 2 beschriebene Scheinwerfersystem 10 verwendet werden, auf das sich im Folgenden auch bezogen wird.

In der Figur 3 ist ein Flussdiagramm des Verfahrensablaufs gemäß dem Ausführungsbeispiel des erfindungsgemäßen Verfahrens dargestellt. Das Scheinwerfersystem 10 wird im Verfahrensschritt 51 zunächst in einem ersten Betriebsmodus betrieben, bei welchem die Hell-Dunkel-Grenze 42 der Lichtemission der Scheinwerfer 2R, 2L durch beide Blenden 4R, 4L auf einen Bereich von etwa minus 15° unterhalb der Horizontalebene 41 begrenzt wird, welche die Lichtquellen der Scheinwerfer 2R, 2L schneidet. Die dazugehörige Vertikallichtverteilung 40, d.h. die Projektion der Lichtverteilung auf einen Schirm, der senkrecht zur Längsachse des Fahrzeugs 1 angeordnet ist, ist schematisch in der Figur 4A dargestellt. Die so erzeugte Stadtlichtverteilung erzielt vor dem Fahrzeug 1 eine gleichmäßige Ausleuchtung 43, die im seitlichen Bereich entsprechend der Fokussierung der Lichtverteilung abfällt. Hierdurch werden Fahrer entgegenkommender Fahrzeuge und andere Verkehrsteilnehmer im geteilten Verkehrsraum einer Stadt möglichst wirkungsvoll vor Fremdblendung geschützt. In einem weiteren Betriebsmodus wird die Hell-Dunkel-Grenze für einen Lateralwinkelbereich höher angesetzt, z.B. mit einem ansteigenden Ast auch oberhalb der Horizontalebene zur Bereitstellung eines Abblendlichts (nicht dargestellt). Im allgemeinen wird die Lichtverteilung gemäß dem Funktionsalgorithmus des adaptiven Frontbeleuchtungssystems, zu dem das Scheinwerfersystem 10 gehört, adaptiv gesteuert.

Im Verfahrensschritt 52 wird mittels des Kamerasystems 6 die Existenz eines Individuums in der Umgebung in Fahrtrichtung vor dem Fahrzeug 1 erfasst und sodann unmittelbar die Position und die Bewegung B ermittelt. Ferner wird das erfasste Individuum als erwachsener Fußgänger 20 klassifiziert. Das Scheinwerfersystem 10 wechselt sodann in den Fußgängerbeleuchtungs-Modus, für den die Lichtemission des Scheinwerfersystems 10 gemäß dem Ergebnis der Verfahrensschritte 53 - 56 anzupassen ist.

Im Verfahrensschritt 53 wird zunächst die Geschwindigkeit des eigenen Fahrzeugs 1 ermittelt. Im Verfahrensschritt 54 werden sodann verschiedene Gefahrenzonen 31 - 34 in der Umgebung in Fahrtrichtung vor dem Fahrzeug 1 definiert (siehe Figur 1). Diese werden umso größer gewählt, desto größer die zuvor ermittelte Geschwindigkeit des Fahrzeugs 1 ist, damit dem längeren Reaktions- und Bremsweg des Fahrzeugs 1 im potentiellen Fall einer Kollision Rechnung getragen wird.

Der Gefahrenbereich 31 liegt auf der Fahrbahn vor dem Fahrzeug 1. Die Länge des Gefahrenbereichs 31 wird gemäß dem Ausführungsbeispiel aus dem Produkt der Geschwindigkeit des Fahrzeugs 1 mit einer festen Zeitgröße T, z.B. mit zwischen 3 s < T < 5 s, bestimmt. Seitlich erstreckt sich der Gefahrenbereich 31 von der prognostizierten Spur des Fahrzeugs 1 bis zu einem Sicherheitsabstand in der Größenordnung von einem Meter links und rechts vom Fahrzeug, wobei der Sicherheitsabstand links in einer Ausführungsform größer als rechts gewählt wird und umso größer ist, je höher die Geschwindigkeit des Fahrzeugs 1 ist. Die weiteren Gefahrenbereiche 32 - 34 liegen links vom Gefahrenbereich 31, in Fahrtrichtung vor dem Gefahrenbereich 31 bzw. rechts vom Gefahrenbereich 31.

Im Verfahrensschritt 55 wird der Verkehrssituation bzw. dem Fußgänger 20 eine Kritikalitätsklasse zugeordnet und ein Gefahrenpotential ermittelt. Die Bewertung des Gefahrenpotentials und/oder die Zuordnung zu einer Kritikalitätsklasse erfolgt dabei in Abhängigkeit davon, ob die gegenwärtige Position und/oder eine aus der Bewegung B des Fußgängers 20 prognostizierte zukünftige Position in einer der Gefahrenzonen 31 - 34 liegt. Beispielsweise wird für jede Kombination einer Gefahrenzonen 31 - 34, in der sich Fußgänger gerade aufhält, mit einer Gefahrenzonen 31 - 34, in die sich der Fußgänger aufgrund der erfassten Bewegung B zu bewegen scheint, eine Kritikalitätsklasse definiert. Das Gefahrenpotential wird als eindimensionale Parametrisierung der Kritikalitätsklassen berechnet, indem z.B. jeder Kritikalitätsklasse ein Gefahrenwert zugeordnet wird, wobei unterschiedliche Kritikalitätsklassen denselben Gefahrenwert aufweisen können.

Jeder Kritikalitätsklasse bzw. jedem Gefahrenwert wird eine zu erzielende Lichtverteilung zugeordnet. Um diese zu erzielen, werden Maßnahmen definiert, in welcher Weise die Lichtemission der Scheinwerfer 2R, 2L geschwenkt, die Blenden 4R, 4L verstellt und/oder ggf. die LEDs des LED-Matrix-Moduls eingeschaltet oder angesteuert werden müssen. Die so definierten Maßnahmen werden im Schritt 56 in Abhängigkeit von dem Ergebnis der vorangegangenen Schritte 52 - 55 durchgeführt.

Die verschiedenen Maßnahmen zum Verändern der Lichtemission des Scheinwerfersystems 10 und dazugehörige Vertikallichtverteilungen, die gemäß dem Ausführungsbeispiel des erfindungsgemäßen Verfahrens erzeugt werden, werden nun mit Bezug zu den Figuren 4A-4E erläutert.

Wie bereits erwähnt, erzeugt das Scheinwerfersystem 10 zunächst eine Stadtlichtverteilung, deren Vertikallichtverteilung 40, also der vertikale Schnitt der Lichtverteilung vor dem Fahrzeug 1, in der Figur 4A dargestellt ist. Die Hell-Dunkel-Grenze 42 der Lichtemission der Scheinwerfer 2R, 2L wird durch beide Blenden 4R, 4L auf einen Bereich von etwa minus 15° unterhalb der Horizontalebene 41 begrenzt. Ein Verschwenken der Scheinwerfer 2R, 2L findet nicht oder nur nach Maßgabe einer Kurvenlichtfunktion statt (nicht dargestellt).

Wird ein Fußgänger 20 im rechts gelegenen Gefahrenbereich 34 erfasst, wird die rechte Blende 4R und optional auch die linke Blende 4L so verstellt, dass die Hell-Dunkel-Grenze 42 der Lichtemission der Scheinwerfer 2R und optional des Scheinwerfers 2L vertikal bis knapp unter die Horizontalebene 41 angehoben wird. Die gleichmäßige Ausleuchtung 43 fällt wiederum im seitlichen Bereich entsprechend der Fokussierung der Lichtverteilung ab. Außerdem wird die Lichtemission des rechten Scheinwerfers 2R um die vertikale Achse 3R etwas nach rechts bis zur Position des Fußgängers 20 geschwenkt, wenn außerdem erfasst wurde, dass sich die Bewegung B des Fußgängers 20 quer auf die Fahrbahn in den Gefahrenbereich 31 richtet. Der Hellbereich 43 erweitert sich somit seitlich bis zum sensorisch erfassten Fußgänger 20.

Die Hell-Dunkel-Grenze 42 wird vorzugsweise derart ausgerichtet, dass sie an der Position des Fußgängers 20 einer Höhe von etwa 0,8 m entspricht. Diese Höhe reicht einerseits aus, damit der Fahrer den Fußgänger 20 noch gut wahrnehmen kann, andererseits der Fußgänger 20 selber nicht geblendet wird. Die Höhe, auf welche die Hell-Dunkel-Grenze 42 begrenzt wird, wird dabei an die Augenhöhe des Fußgängers 20 entsprechend angepasst. In jedem Fall wird die Hell-Dunkel-Grenze 42 aber nicht weiter nach oben als die Horizontalebene 41 verändert, um andere Verkehrsteilnehmer nicht zu blenden.

In der Figur 4C ist der analoge Fall dargestellt, wenn sich ein Fußgänger 20 im links gelegenen Gefahrenbereich 32 befindet. Hier werden rechte und linke Blende 4R, 4L, sowie rechter und linker Scheinwerfer 2R, 2L entsprechend seitenvertauscht verstellt bzw. verschwenkt.

Ausgehend von der Situation gemäß der Figur 4C werde nun eine Bewegung B des Fußgängers vom links gelegenen Gefahrenbereich 32 in einen der mittigen Gefahrenbereiche 31 oder 33 erfasst. Wenn es die Verkehrssituation erlaubt, d.h. wenn keine weiteren Verkehrsteilnehmer sensorisch erfasst wurden, die potentiell geblendet würden, wird die Blende 4L des linken Scheinwerfers 2L gemäß der Stellung verändert, die für die Lichtverteilung 44 einer Fernlichtfunktion verwendet wird, wie dies in der Figur 4D dargestellt ist.

Hat sich der Fußgänger 20 ausgehend von der Figur 4B in den Gefahrenbereich 31 bewegt, so wird ein hohes Gefahrenpotential erkannt. Es werden daraufhin die LEDs des LED-Matrix-Moduls 5 so eingeschaltet, dass der dadurch erzeugte Hellbereich 45 der Lichtverteilung (siehe Figur 4E) auf einen Höhenbereich ausgerichtet wird, der sich unmittelbar an die Obergrenze der bisherigen Hell-Dunkel-Grenze 42 anschließt. Die Lichtemission des LED-Matrix-Moduls 5 wird so gesteuert, dass der Hellbereich 45 an der Querungslinie 35, auf der der Fußgänger 20 die Fahrbahn quert, in einem Höhenbereich zwischen 0,8 m und 1,2 m liegt, wobei wiederum die Augenhöhe des Fußgängers 20 berücksichtigt wird und der Höhenbereich ggf. daran angepasst wird.

Die Helligkeit des Hellbereichs 45 wird beim Einschalten des LED-Matrix-Moduls 5 so gewählt, dass diese genauso hell wie der Helligkeitsbereich 43 wahrgenommen wird. Besteht weiterhin Kollisionsgefahr, so kann die Helligkeit im Hellbereich 45 im weiteren Zeitverlauf stufenlos oder stufenweise angehoben werden. Optional kann ein Blinkmuster vorgesehen werden, um den Fußgänger 20 vor einer drohenden Kollision zu warnen. Durch die Verwendung von LEDs kann die Helligkeitsanpassung und das Lichtmuster für diesen Hellbereich 45 in technisch einfacher Weise erzeugt werden.

Das Kamerasystem 6 kann ferner auch dazu ausgestaltet sein, andere Fahrzeuge zu erfassen, indem deren Position und Bewegung derart berücksichtigt wird, dass der Fahrer eines so erfassten Fahrzeugs durch die vom Scheinwerfersystem 10 erzeugten Lichtverteilung nicht geblendet wird.

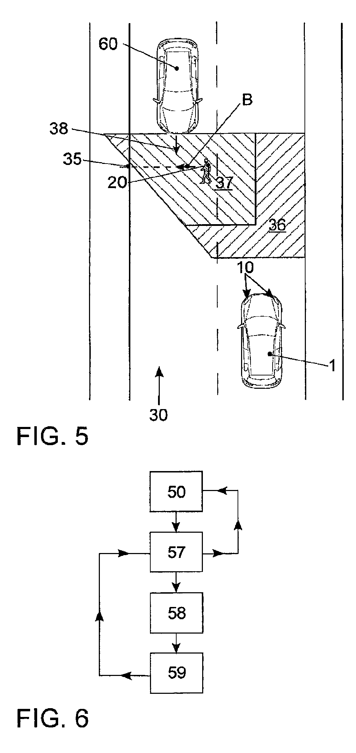

Dazu wird in Figur 5 eine weitere Verkehrssituation dargestellt, in welcher ein zweites Ausführungsbeispiel des Verfahrens zum Betreiben eines Scheinwerfersystems anwendbar ist. Die dargestellte Situation schließt sich an die Situation an, die in Figur 1 dargestellt ist. Die Position des Fußgängers 20 hat sich insoweit verändert, als dass er das Fahrzeug 1 bereits passiert hat und nun die linke Seite der Fahrbahn 30 überquert. Auf dieser Fahrbahnseite fährt ein entgegenkommendes Fahrzeug 60 in Richtung 38 des Fußgängers 20. Der Fußgänger 20 ist also im Begriff vor dem entgegenkommenden Fahrzeug 60 die Fahrbahn 30 entlang der Querungslinie 35 zu queren.

In der Figur 6 ist ein Flussdiagramm des zweiten Ausführungsbeispiels des erfindungsgemäßen Verfahrens dargestellt. Die Verfahrensschritte schließen an das Verfahren aus Figur 3 an. Nach Verfahrensschritt 56 des Verfahrens nach Figur 3 wird im Verfahrensschritt 57 mittels des Kamerasystems 6 auf der Gegenseite der Fahrbahn ein entgegenkommendes Fahrzeug 60 sensorisch erfasst. Die Position und Bewegung B des Fußgängers 20 sind dabei bereits aus Verfahrensschritt 52 bekannt. Die Bereiche der Fahrbahn 30 vor dem entgegenkommenden Fahrzeug 60 werden dabei in zwei Gefahrenzonen 36 und 37 eingeteilt.

Im Verfahrensschritt 58 wird der Verkehrssituation bzw. dem Fußgänger 20 eine Kritikalitätsklasse bezüglich des entgegenkommenden Fahrzeugs 60 zugeordnet und ein Gefahrenpotential ermittelt. Die Bewertung des Gefahrenpotentials und/oder die Zuordnung zu einer Kritikalitätsklasse erfolgt dabei in Abhängigkeit davon, ob die gegenwärtige Position und/oder eine aus der Bewegung B des Fußgängers 20 prognostizierte zukünftige Position in einer der Gefahrenzonen 36 oder 37 liegt. Beispielsweise wird für jede Kombination einer Gefahrenzonen 36 oder 37, in der sich Fußgänger 20 gerade aufhält, mit einer Gefahrenzonen 36 und 37, in die sich der Fußgänger 20 aufgrund der erfassten Bewegung B zu bewegen scheint, eine Kritikalitätsklasse definiert. Das Gefahrenpotential wird als eindimensionale Parametrisierung der Kritikalitätsklassen berechnet, indem z.B. jeder Kritikalitätsklasse ein Gefahrenwert zugeordnet wird, wobei unterschiedliche Kritikalitätsklassen denselben Gefahrenwert aufweisen können.

Jeder Kritikalitätsklasse bzw. jedem Gefahrenwert wird eine zu erzielende Lichtverteilung zugeordnet. Um diese zu erzielen, werden Maßnahmen definiert, in welcher Weise die Lichtemission der Scheinwerfer 2R, 2L geschwenkt, die Blenden 4R, 4L verstellt und/oder ggf. die LEDs des LED-Matrix-Moduls ausgeschaltet oder angesteuert werden müssen. Die so definierten Maßnahmen werden im Schritt 60 in Abhängigkeit von dem Ergebnis der vorangegangenen Schritte 57 - 59 durchgeführt. Weiterhin kann die Verstellung der Blenden 4R, 4L und/oder ggf. die Ansteuerung der LEDs des LED-Matrix-Moduls anhand äußerer Faktoren getätigt werden.

Wird ein entgegenkommendes Fahrzeug 60 auf der Gegenseite der Fahrbahn 30 vom Kamerasystem erfasst, wird also die linke Blende 4L optional auch die rechte Blende 4R so verstellt, dass der Fahrbahnbereich bis zur Motorhaube des entgegenkommenden Fahrzeugs 60 vollkommen ausgespart wird. Weiterhin kann auch der Fußgänger 20 aus der Lichtverteilung ausgenommen werden. Optional kann die Lichtverteilung auch bis zu dem Fahrer des entgegenkommenden Fahrzeugs 60 reichen. Dazu wird vorzugsweise eine strukturierte Blende verwendet, mit der Bereiche in der Lichtverteilung ausmaskiert werden können. Durch das Ausmaskieren des Bereichs auf der Fahrbahn 30 vor dem entgegenkommenden Fahrzeugs 60 wird eine Blendung des Fahrers des entgegenkommenden Fahrzeugs 60 vermieden. Der Fußgänger 20 wird dann entsprechend von den Scheinwerfern des entgegenkommenden Fahrzeugs 60 beleuchtet.

### Bezugszeichenliste

- 1: Fahrzeug
- 2L, 2R: Scheinwerfer
- 3L, 3R: Schwenkachsen
- 4L, 4R: Blenden
- 5: LED-Matrix-Modul
- 6: Kamerasystem
- 7: Steuereinheit
- 10: Scheinwerfersystem
- 20: Fußgänger
- 30: Straße
- 31 - 34: Gefahrenbereiche
- 35: Querungslinie
- 36: Gefahrenzone
- 37: Gefahrenzone
- 38: Fahrtrichtung des entgegenkommenden Fahrzeugs
- 40: Vertikallichtverteilung
- 41: Horizontalebene
- 42: Hell-Dunkel-Grenze
- 43 - 45: Hellbereiche
- 50: Flussdiagramm Verfahrensablauf
- 51: Abblendlichtbetrieb
- 52: sensorische Erfassung eines Individuums
- 53: Bestimmung der Fahrzeuggeschwindigkeit
- 54: Bestimmung der Gefahrenzonen
- 55: Zuordnung der Kritikalitätsklasse
- 56: Steuerung der Lichtverteilung
- 57: sensorische Erfassung eines entgegenkommenden Fahrzeugs
- 58: Zuordnung der Kritikalitätsklasse
- 59: Steuerung der Lichtverteilung
- 60: entgegenkommendes Fahrzeug
- B: Bewegungsvektor des Individuums

## Patentansprüche

1. Verfahren zum Betreiben eines Scheinwerfersystems (10) in einem Fahrzeug (1), umfassend wenigstens einen Scheinwerfer (2R, 2L), wobei die Lichtemission des Scheinwerfers (2R, 2L) um eine im Wesentlichen vertikale Achse (3R, 3L) schwenkbar ist, wobei das Verfahren die Schritte umfasst, dass
- das Scheinwerfersystem (10) in einem ersten Betriebsmodus betrieben wird,
- die Position und/oder die Bewegung (B) eines Individuums (20) in der Umgebung (31 - 34) in Fahrtrichtung vor dem Fahrzeug (1) sensorisch erfasst wird,
- das Scheinwerfersystem (10) in einen zweiten Betriebsmodus wechselt, wenn ein Individuum (20) erfasst wurde,
- wobei die Lichtemission des wenigstens einen Scheinwerfers (2R; 2L) in Abhängigkeit von der Position und/oder der Bewegung (B) des Individuums (20) durch Schwenken des Scheinwerfers (2R, 2L) um die vertikale Achse (3R, 3L) seitlich geschwenkt wird,
- der wenigstens eine Scheinwerfer (2R, 2L) wenigstens eine verstellbare Blende (4R, 4L) zur Veränderung der Hell-Dunkel-Grenze (42) der Lichtemission des Scheinwerfers (2R, 2L) umfasst und
- bei dem Wechseln in den zweiten Betriebsmodus zusätzlich die Blende (4R, 4L) des wenigstens einen Scheinwerfers (2R, 2L) verstellt wird, sodass die Hell-Dunkel-Grenze (42) der Lichtemission des wenigstens einen Scheinwerfers (2R, 2L) wenigstens in einem Lateralwinkelbereich vertikal verändert wird,
**dadurch gekennzeichnet,**
- **dass** beim Wechsel in den zweiten Betriebsmodus die Lichtemission des wenigstens einen Scheinwerfers (2R; 2L) durch Schwenken des Scheinwerfers seitlich bis zum sensorisch erfassten
Individuum (20) erweitert wird, wobei
- die Blende (4R, 4L) des wenigstens einen Scheinwerfers (2R, 2L) verstellt wird, sodass an der Position des sensorisch erfassten Individuums (20) die Höhe der Hell-Dunkel-Grenze (42) angepasst an die Augenhöhe des Individuums (20) begrenzt wird.

2. Verfahren nach einem der Ansprüche 2 oder 3,
**dadurch gekennzeichnet, dass**
- dem sensorisch erfassten Individuum (20) in Abhängigkeit von seiner Position und/oder Bewegung (B) eine Kritikalitätsklasse zugeordnet wird und
- die Hell-Dunkel-Grenze (42) und/oder der Schwenkwinkel in Abhängigkeit von der zugeordneten Kritikalitätsklasse verändert werden.

3. Verfahren nach Anspruch 2,
**dadurch gekennzeichnet,**
**dass** die Lichtemission des wenigstens einen Scheinwerfers (2R, 2L) im zweiten Betriebsmodus nur dann geschwenkt wird, wenn eine Bewegungskomponente des Individuums (20) erfasst wurde, die größer als eine vorbestimmte Bewegungskomponente quer zur Fahrbahn (30) ist.

4. Verfahren nach einem der Ansprüche 2 oder 3,
**dadurch gekennzeichnet,**
**dass** der wenigstens eine Scheinwerfer (2R, 2L) im zweiten Betriebsmodus die Lichtverteilung (44) einer Fernlichtfunktion verwendet.

5. Verfahren nach einem der Ansprüche 2 oder 3,
**dadurch gekennzeichnet,**
**dass** die Hell-Dunkel-Grenze (42) beim Wechsel in den zweiten Betriebsmodus verändert wird bis
- auf den Vertikalwinkel der Horizontalebene (41), die eine Lichtquelle des wenigstens einen Scheinwerfers (2R, 2L) schneidet, oder
- einen Vertikalwinkel, der an der Position des sensorisch erfassten Individuums (20) einer ersten Höhe zwischen 0,5 m bis 1,0 m, vorzugsweise etwa 0,8 m, entspricht, je nachdem, welcher Vertikalwinkel weiter nach unten gerichtet ist.

6. Verfahren nach einem der Ansprüche 2 bis 5, wobei das Scheinwerfersystem (10) wenigstens eine Zusatzlichtquelle (5) umfasst, die geeignet ist, Licht in die Umgebung (31 - 34) in Fahrtrichtung vor dem Fahrzeug (1) zu emittieren,
**dadurch gekennzeichnet,**
- **dass** das Gefahrenpotential einer Kollision zwischen Fahrzeug (1) und Individuum (20) bewertet wird und bei der Zuordnung der Kritikalitätsklassen berücksichtigt wird und
- **dass**, wenn das Gefahrenpotential einen Grenzwert überschreitet, die Zusatzlichtquelle (5) eingeschaltet wird, wobei die Lichtverteilung (45) der Zusatzlichtquelle (5) vorzugsweise auf einen Höhenbereich ausgerichtet wird, dessen untere Grenze der ersten Höhe, die zwischen 0,5 m und 1,0 m liegt, an der Position des Individuums (20) entspricht.

7. Verfahren nach Anspruch 6,
**dadurch gekennzeichnet,**
**dass** die Helligkeit der Zusatzlichtquelle (5) in Abhängigkeit von der Kritikalitätsklasse und/oder dem Gefahrenpotential verändert wird, wobei die Helligkeit bei der untersten Kritikalitätsklasse und/oder dem niedrigsten Gefahrenpotential, bei dem die Zusatzlichtquelle (5) eingeschaltet wird, der Helligkeit der angrenzenden Lichtverteilung (43) des wenigstens einen Scheinwerfers (2R, 2L) entspricht.

8. Verfahren nach einem der Ansprüche 2 bis 7,
**dadurch gekennzeichnet, dass**
- ein oder mehrere Gefahrenzonen (31 - 34) in der Umgebung in Fahrtrichtung vor dem Fahrzeug (1) definiert werden, die umso größer gewählt werden, desto größer die Geschwindigkeit des Fahrzeugs (1) ist, und
- die Bewertung des Gefahrenpotentials und/oder die Zuordnung zu einer Kritikalitätsklasse in Abhängigkeit davon erfolgt, ob die gegenwärtige Position und/oder eine aus der Bewegung (B) des Individuums (20) prognostizierte zukünftige Position in einer der Gefahrenzonen (31 - 34) liegt.

9. Verfahren nach einem der vorhergehenden Ansprüche,
**dadurch gekennzeichnet,**
- **dass** zusätzlich zur Position und/oder Bewegung (B) des Individuums (20) die Position und Bewegung eines entgegenkommenden Fahrzeugs (60) sensorisch erfasst wird und
- **dass** das Scheinwerfersystem (10) in einen dritten Betriebsmodus wechselt, wenn zusätzlich ein entgegenkommendes Fahrzeug (60) erfasst wurde.

10. Verfahren nach Anspruch 9,
**dadurch gekennzeichnet,**
**dass** bei dem Wechsel in den dritten Betriebsmodus des Scheinwerfersystems (10) die Lichtemission des wenigstens einen Scheinwerfers (2R, 2L) in Abhängigkeit von der Position und/oder der Bewegung (B) des Individuums (20) durch Schwenken des Scheinwerfers (2R, 2L) um die vertikale Achse (3R, 3L) seitlich geschwenkt wird und/oder die Lichtemission des wenigstens einen Scheinwerfer (2R, 2L) in Richtung des entgegenkommenden Fahrzeugs (60) abgeschattet wird und/oder eine Blende (4R, 4L) des wenigstens einen Scheinwerfers (2R, 2L) verstellt wird, sodass die Hell-Dunkel-Grenze (42) der Lichtemission derart verändert wird, dass ein Bereich bis zu einem bestimmten Abstand vor dem entgegenkommenden Fahrzeug (60) in der Lichtverteilung ausgespart wird.

11. Verfahren nach Anspruch 10,
**dadurch gekennzeichnet,**
- **dass** dem sensorisch erfassten Individuum (20) zusätzlich eine Kritikalitätsklasse bezüglich des sensorisch erfassten, entgegenkommenden Fahrzeug (60) in Abhängigkeit von seiner Position und/oder Bewegung (B) zugeordnet wird und
- die Hell-Dunkel-Grenze (42) und/oder der Schwenkwinkel und/oder die Abschattung der Lichtemission des wenigstens einen Scheinwerfers (2R, 2L) in Abhängigkeit von der dem Individuum (20) bezüglich des entgegenkommenden Fahrzeugs (60) zugeordneten Kritikalitätsklasse verändert wird.

12. Scheinwerfersystem (10) für ein Fahrzeug (1), umfassend
- wenigstens einen Scheinwerfer (2R, 2L), dessen Lichtemission um eine im Wesentlichen vertikale Achse (3R, 3L) schwenkbar ist,
- wenigstens eine verstellbare Blende (4R, 4L), die in Lichtemissionsrichtung vor dem wenigstens einen Scheinwerfer (2R, 2L) angeordnet ist, zur Veränderung der Hell-Dunkel-Grenze (42) der Lichtemission des Scheinwerfers (2R, 2L), und
- eine Steuereinheit (7), die mit dem wenigstens einen Scheinwerfer (2R, 2L) und der wenigstens einen Blende (4R, 4L) verbunden ist, zum Steuern der Lichtemission des wenigstens einen Scheinwerfers (2R, 2L), wobei
- das Scheinwerfersystem (10) eine mit der Steuereinheit (7) verbundene Erfassungseinrichtung (6) zum sensorischen Erfassen der Position und/oder der Bewegung (B) eines Individuums (20) in der Umgebung (31 - 34) in Fahrtrichtung vor dem Fahrzeug (1) umfasst,
- mittels der Steuereinheit (7) auf das sensorische Erfassen eines Individuums (20) durch die Erfassungseinrichtung (6) das Scheinwerfersystem (10) von einem ersten in einen zweiten Betriebsmodus wechselbar ist, wobei die Lichtemission des wenigstens einen Scheinwerfers (2R, 2L) in Abhängigkeit von der Position und/oder der Bewegung (B) des Individuums (20) durch Schwenken des Scheinwerfers (2R, 2L) um die vertikale Achse (3R, 3L) seitlich schwenkbar ist und
- beim Wechsel in den zweiten Betriebsmodus eine Blende (4R, 4L) des wenigstens einen Scheinwerfers (2R, 2L) verstellt wird,
sodass die Hell-Dunkel-Grenze (42) der Lichtemission des Scheinwerfers (2R, 2L) wenigstens in einem Lateralwinkelbereich vertikal verändert wird,
**dadurch gekennzeichnet,**
- **dass** beim Wechsel in den zweiten Betriebsmodus die Lichtemission des wenigstens einen Scheinwerfers (2R; 2L) durch Schwenken des Scheinwerfers seitlich bis zum sensorisch erfassten Individuum (20) erweitert wird, wobei
- die Blende (4R, 4L) des wenigstens einen Scheinwerfers (2R, 2L) verstellt wird,
sodass an der Position des sensorisch erfassten Individuums (20) die Höhe der Hell-Dunkel-Grenze (42) angepasst an die Augenhöhe des Individuums (20) begrenzt ist.

## Claims

1. Method for operating a headlight system (10) in a vehicle (1), comprising at least one headlight (2R, 2L), wherein the light emission of the headlight (2R, 2L) is pivotable about a substantially vertical axis (3R, 3L), wherein the method comprises the steps that
- the headlight system (10) is operated in a first operating mode,
- the position and/or the movement (B) of an individual (20) in the surroundings (31-34) in the direction of travel in front of the vehicle (1) are/is detected by sensor,
- the headlight system (10) changes to a second operating mode if an individual (20) was detected,
- wherein the light emission of the at least one headlight (2R; 2L) is pivoted laterally depending on the position and/or the movement (B) of the individual (20) by pivoting the headlight (2R, 2L) about the vertical axis (3R, 3L),
- the at least one headlight (2R, 2L) comprises at least one adjustable diaphragm (4R, 4L) for altering the bright-dark boundary (42) of the light emission of the headlight (2R, 2L), and
- upon changing to the second operating mode, the diaphragm (4R, 4L) of the at least one headlight (2R, 2L) is additionally adjusted, such that the bright-dark boundary (42) of the light emission of the at least one headlight (2R, 2L) at least in a lateral angle range is altered vertically,
**characterized**
- **in that** upon changing to the second operating mode, the light emission of the at least one headlight (2R; 2L) is extended by pivoting the headlight laterally as far as the individual (20) detected by a sensor, wherein
- the diaphragm (4R, 4L) of the at least one headlight (2R, 2L) is adjusted, such that at the position of the individual (20) detected by sensor the height of the bright-dark boundary (42) is limited in a manner adapted to the eye level of the individual (20).

2. Method according to either of Claims 2 and 3,
**characterized in that**
- a criticality class is assigned to the individual (20) detected by sensor depending on the position and/or movement (B) of said individual, and
- the bright-dark boundary (42) and/or the pivoting angle are/is altered depending on the assigned criticality class.

3. Method according to Claim 2,
**characterized**
**in that** the light emission of the at least one headlight (2R, 2L) in the second operating mode is pivoted only if a movement component of the individual (20) was detected which is greater than a predetermined movement component transversely with respect to the roadway (30).

4. Method according to either of Claims 2 and 3,
**characterized**
**in that** the at least one headlight (2R, 2L) in the second operating mode uses the light distribution (44) of a main-beam light function.

5. Method according to either of Claims 2 and 3,
**characterized**
**in that** the bright-dark boundary (42) upon changing to the second operating mode is altered to
- the vertical angle of the horizontal plane (41) which intersects a light source of the at least one headlight (2R, 2L), or
- a vertical angle which, at the position of the individual (20) detected by sensor, corresponds to a first height of between 0.5 m and 1.0 m, preferably approximately 0.8 m, depending on which vertical angle is directed further downwards.

6. Method according to any of Claims 2 to 5, wherein the headlight system (10) comprises at least one additional light source (5) which is suitable for emitting light into the surroundings (31-34) in the direction of travel in front of the vehicle (1),
**characterized**
- **in that** the hazard potential of a collision between vehicle (1) and individual (20) is assessed and is taken into account in the assignment of the criticality classes, and
- **in that** if the hazard potential exceeds a limit value, the additional light source (5) is switched on, wherein the light distribution (45) of the additional light source (5) is preferably aligned with a height range whose lower limit corresponds to the first height, which is between 0.5 m and 1.0 m, at the position of the individual (20).

7. Method according to Claim 6,
**characterized**
**in that** the brightness of the additional light source (5) is altered depending on the criticality class and/or the hazard potential, wherein the brightness for the lowest criticality class and/or the lowest hazard potential for which the additional light source (5) is switched on corresponds to the brightness of the adjoining light distribution (43) of the at least one headlight (2R, 2L).

8. Method according to any of Claims 2 to 7,
**characterized in that**
- one or a plurality of hazard zones (31-34) are defined in the surroundings in the direction of travel in front of the vehicle (1), said hazard zones being chosen to be all the larger, the greater the speed of the vehicle (1), and
- the assessment of the hazard potential and/or the assignment to a criticality class are/is carried out depending on whether the current position and/or a future position forecast from the movement (B) of the individual (20) lies in one of the hazard zones (31-34).

9. Method according to any of the preceding claims,
**characterized**
- **in that**, in addition to the position and/or movement (B) of the individual (20), the position and movement of an oncoming vehicle (60) are detected by sensor, and
- **in that** the headlight system (10) changes to a third operating mode if an oncoming vehicle (60) was additionally detected.

10. Method according to Claim 9,
**characterized**
**in that** upon changing to the third operating mode of the headlight system (10), the light emission of the at least one headlight (2R, 2L) is pivoted laterally depending on the position and/or the movement (B) of the individual (20) by pivoting the headlight (2R, 2L) about the vertical axis (3R, 3L) and/or the light emission of the at least one headlight (2R, 2L) in the direction of the oncoming vehicle (60) is shaded and/or a diaphragm (4R, 4L) of the at least one headlight (2R, 2L) is adjusted, such that the bright-dark boundary (42) of the light emission is altered in such a way that a region up to a specific distance in front of the oncoming vehicle (60) is omitted in the light distribution.

11. Method according to Claim 10,
**characterized**
- **in that** the individual (20) detected by sensor is additionally assigned a criticality class with regard to the oncoming vehicle (60) detected by sensor depending on the position and/or movement (B) thereof, and
- the bright-dark boundary (42) and/or the pivoting angle and/or the shading of the light emission of the at least one headlight (2R, 2L) are/is altered depending on the criticality class assigned to the individual (20) with regard to the oncoming vehicle (60).

12. Headlight system (10) for a vehicle (1), comprising
- at least one headlight (2R, 2L) whose light emission is pivotable about a substantially vertical axis (3R, 3L),
- at least one adjustable diaphragm (4R, 4L) which is arranged in front of the at least one headlight (2R, 2L) in the light emission direction, for altering the bright-dark boundary (42) of the light emission of the headlight (2R, 2L), and
- a control unit (7) connected to the at least one headlight (2R, 2L) and the at least one diaphragm (4R, 4L), for controlling the light emission of the at least one headlight (2R, 2L), wherein
- the headlight system (10) comprises a detection device (6) connected to the control unit (7) and serving for detecting by sensor the position and/or the movement (B) of an individual (20) in the surroundings (31-34) in the direction of travel in front of the vehicle (1),
- by means of the control unit (7), in response to an individual (20) being detected by sensor by means of the detection device (6), the headlight system (10) is changeable from a first operating mode to a second operating mode, wherein the light emission of the at least one headlight (2R, 2L) is pivotable laterally depending on the position and/or the movement (B) of the individual (20) by pivoting the headlight (2R, 2L) about the vertical axis (3R, 3L), and
- upon changing to the second operating mode, a diaphragm (4R, 4L) of the at least one headlight (2R, 2L) is adjusted, such that the bright-dark boundary (42) of the light emission of the headlight (2R, 2L) at least in a lateral angle range is altered vertically,
**characterized**
- **in that** upon changing to the second operating mode, the light emission of the at least one headlight (2R; 2L) is extended by pivoting the headlight laterally as far as the individual (20) detected by a sensor, wherein
- the diaphragm (4R, 4L) of the at least one headlight (2R, 2L) is adjusted, such that at the position of the individual (20) detected by sensor the height of the bright-dark boundary (42) is limited in a manner adapted to the eye level of the individual (20).

## Revendications

1. Procédé de mise en fonctionnement d'un système de phare (10) dans un véhicule (1), comprenant au moins un phare (2R, 2L), dans lequel l'émission lumineuse du phare (2R, 2L) peut être amenée à pivoter autour d'un axe sensiblement vertical (3R, 3L), dans lequel le procédé comprend les étapes suivantes:
- le système de phare (10) est mis en fonctionnement dans un premier mode de fonctionnement,
- la position et/ou le déplacement (B) d'un individu (20) dans l'environnement (31-34), dans la direction de déplacement à l'avant du véhicule (1), est détecté par des capteurs,
- le système de phare (10) passe dans un deuxième mode de fonctionnement lorsqu'un individu (20) a été détecté,
- dans lequel l'émission lumineuse de l'au moins un phare (2R, 2L) est amenée à pivoter latéralement en fonction de la position et/ou du mouvement (B) de l'individu (20) en faisant pivoter le phare (2R, 2L) autour de l'axe vertical (3R, 3L),
- l'au moins un phare (2R, 2L) comprend au moins un diaphragme réglable (4R, 4L) pour modifier la ligne de coupure (42) de l'émission lumineuse du phare (2R, 2L), et
- lors du passage dans le deuxième mode de fonctionnement, le diaphragme (4R, 4L) de l'au moins un phare (2R, 2L) est en outre ajusté de manière à ce que la ligne de coupure (42) de l'émission lumineuse de l'au moins un phare (2R, 2L) soit modifiée verticalement dans au moins une zone angulaire latérale,
**caractérisé en ce que**,
- lors du passage dans le deuxième mode de fonctionnement, l'émission lumineuse de l'au moins un phare (2R, 2L) est étendue en faisant pivoter latéralement le phare jusqu'à ce que l'individu (20) soit détecté par les capteurs, dans lequel
- le diaphragme (4R, 4L) de l'au moins un phare (2R, 2L) est ajusté de manière à ce que, à la position de l'individu (20) détecté par les capteurs, la hauteur de la ligne de coupure (42) soit limitée de manière adaptée à la hauteur des yeux de l'individu (20).

2. Procédé selon l'une quelconque des revendications 2 ou 3,
**caractérisé en ce que**:
- une classe de criticité est associée à l'individu (20) détecté par les capteurs en fonction de sa position et/ou de son mouvement (B), et
- la ligne de coupure (42) et/ou l'angle de pivotement est/sont modifié(s) en fonction de la classe de criticité associée.

3. Procédé selon la revendication 2,
**caractérisé en ce que** lumineuse de l'au moins un phare (2R, 2L) dans le deuxième mode de fonctionnement n'est amenée à pivoter que lorsqu'une composante de mouvement de l'individu (20) a été détectée, laquelle composante de mouvement est supérieure à une composante de mouvement prédéterminée transversalement à la route (30).

4. Procédé selon l'une quelconque des revendications 2 ou 3,
**caractérisé en ce que** l'au moins un phare (2R, 2L), dans le deuxième mode de fonctionnement, utilise la distribution lumineuse (44) d'une fonction de feu de route.

5. Procédé selon l'une quelconque des revendications 2 ou 3,
**caractérisé en ce que** la ligne de coupure (42), lors d'un passage dans le deuxième mode de fonctionnement, est modifiée jusqu'à
- l'angle vertical du plan horizontal (41) qui coupe une source lumineuse de l'au moins un phare (2R, 2L), ou
- un angle vertical qui, à la position de l'individu (20) détecté par les capteurs, correspond à une première hauteur comprise entre 0,5 m et 1,0 m, de préférence environ 0,8 m, au fur et à mesure que ledit angle vertical est orienté davantage vers le bas.

6. Procédé selon l'une quelconque des revendications 2 à 5, dans lequel le système de phare (10) comprend au moins une source lumineuse supplémentaire (5) qui est appropriée pour émettre une lumière dans l'environnement (31-34), dans la direction de déplacement à l'avant du véhicule (1),
**caractérisé en ce que**
- le potentiel de risque de collision entre le véhicule (1) et l'individu (20) est évalué et est pris en compte lors de l'association des clases de criticité, et
- lorsque le potentiel de risque dépasse une valeur limite, la source lumineuse supplémentaire (5) est activée, dans lequel la distribution lumineuse (45) de la source lumineuse supplémentaire (5) est de préférence orientée vers un domaine de hauteurs dont la limite inférieure correspond à la première hauteur, qui est comprise entre 0,5 m et 1,0 m, à la position de l'individu (20).

7. Procédé selon la revendication 6,
**caractérisé en ce que** la luminosité de la source lumineuse supplémentaire (5) est modifiée en fonction de la classe de criticité et/ou du potentiel de risque, dans lequel la luminosité, pour la classe de criticité la plus basse et/ou pour le potentiel de risque le plus faible, pour laquelle la source lumineuse supplémentaire (5) est activée, correspond à la luminosité de la distribution lumineuse adjacente (43) de l'au moins un phare (2R, 2L).

8. Procédé selon l'une quelconque des revendications 2 à 7,
**caractérisé en ce que**
une ou plusieurs zones de danger (31-34) sont définies dans l'environnement, dans la direction de déplacement à l'avant du véhicule (1), qui sont sélectionnées de manière à être d'autant plus étendues que la vitesse du véhicule (1) est élevée, et
- l'évaluation du potentiel de risque et/ou l'association à une classe de criticité est/sont effectuée(s) en fonction du fait de savoir si la position actuelle et/ou une position future prévue à partir du mouvement (B) de l'individu (20) se situe dans l'une des zones de danger (31-34).

9. Procédé selon l'une quelconque des revendications précédentes,
**caractérisé en ce que**:
- en plus de la position et/ou du mouvement (B) de l'individu (20), la position et le mouvement d'un véhicule (60) venant en sens inverse est/sont détecté(s) par des capteurs, et
- le système de phare (10) est amené à passer dans un troisième mode de fonctionnement lorsqu'un véhicule venant en sens inverse (60) a en outre été détecté.

10. Procédé selon la revendication 9,
**caractérisé en ce que**, lors du passage dans le troisième mode de fonctionnement du système de phare (10), l'émission lumineuse de l'au moins un phare (2R, 2L) est amenée à pivoter latéralement en fonction de la position et/ou du mouvement (B) de l'individu (20) en faisant pivoter latéralement le phare (2R, 2L) autour de l'axe vertical (3R, 3L) et/ou en interrompant l'émission lumineuse de l'au moins un phare (2R, 2L) dans la direction du véhicule venant en sens inverse (60) et/ou en ajustant un diaphragme (4R, 4L) de l'au moins un phare (2R, 2L) de manière à ce que la ligne de coupure (42) de l'émission lumineuse soit modifiée afin qu'une région allant jusqu'à une distance déterminée à l'avant du véhicule venant en sens inverse (60) soit épargnée dans la distribution lumineuse.

11. Procédé selon la revendication 10,
**caractérisé en ce que**:
- une classe de criticité concernant le véhicule venant en sens inverse (60) détecté par les capteurs est en outre associée à l'individu (20) détecté par les capteurs en fonction de sa position et/ou de son mouvement (B), et
- la ligne de coupure (42) et/ou l'angle de pivotement et/ou l'obscurcissement de l'émission lumineuse de l'au moins un phare (2R, 2L) est/sont modifié(s) en fonction de la classe de criticité associée à l'individu (20) par rapport au véhicule venant en sens inverse (60).

12. Système de phare (10) destiné à un véhicule (1), comprenant
- au moins un phare (2R, 2L) dont l'émission lumineuse peut être amenée à pivoter autour d'un axe sensiblement vertical (3R, 3L),
- au moins un diaphragme réglable (4R, 4L) qui est disposé dans la direction d'émission lumineuse à l'avant de l'au moins un phare (2R, 2L), pour modifier la ligne de coupure (42) de l'émission lumineuse du phare (2R, 2L), et
- une unité de commande (7) qui est reliée à l'au moins un phare (2R, 2L) et à l'au moins un diaphragme (4R, 4L), pour commander l'émission lumineuse de l'au moins un phare (2R, 2L), dans lequel
- le système de phare (10) comprend un dispositif de détection (6) relié à l'unité de commande (7) pour détecter au moyen de capteurs la position et/ou le mouvement (B) d'un individu (20) dans l'environnement (31-34), dans la direction de déplacement à l'avant du véhicule (1),
- le système de phare (10) peut être amené à passer d'un premier à un deuxième mode de fonctionnement à l'aide de l'unité de commande (7) lors de la détection par des capteurs d'un individu (20) au moyen du dispositif de détection (6), dans lequel l'émission lumineuse de l'au moins un phare (2R, 2L) peut être amenée à pivoter latéralement en fonction de la position et/ou du mouvement (B) de l'individu (20) en faisant pivoter le phare (2R, 2L) autour de l'axe vertical (3R, 3L),
- lors du passage dans le deuxième mode de fonctionnement, un diaphragme (4R, 4L) de l'au moins un phare (2R, 2L) est ajusté de manière à ce que la ligne de coupure (42) de l'émission lumineuse du phare (2R, 2L) soit modifiée verticalement dans au moins une région angulaire latérale,
**caractérisé en ce que**
- lors du passage dans le deuxième mode de fonctionnement, l'émission lumineuse de l'au moins un phare (2R, 2L) est étendue en faisant pivoter latéralement le phare jusqu'à ce que l'individu (20) soit détecté par les capteurs, dans lequel
- le diaphragme (4R, 4L) de l'au moins un phare (2R, 2L) est ajusté de manière à ce que, à la position de l'individu (20) détecté par les capteurs, la hauteur de la ligne de coupure (42) soit limitée de manière adaptée à la hauteur des yeux de l'individu (20).
